# EUROPEAN PATENT SPECIFICATION

(11) **EP 2 829 505 B1**
(45) Date of publication and mention of the grant of the patent: **02.09.2015**
(21) Application number: 14002379.7
(22) Date of filing: 10.07.2014
(51) Int. Cl.: B67D 1/08, F16L 37/32

(54) **Delivering tap made of plastic material with two inlets for beverages with gas equipped with tamper-evident system, and container for beverages with gas equipped with such tap**
Mit Sicherheitsverpackungssystem ausgestatteter Ausgabehahn aus Kunststoffmaterial mit zwei Eingängen für Getränke mit Kohlensäure und mit solch einem Hahn ausgestatteter Behälter für Getränke mit Kohlensäure
Robinet de distribution en matière plastique doté de deux entrées pour boissons gazeuses équipé d'un système inviolable et récipient pour boissons gazeuses équipé d'un tel robinet

(30) Priority: 25.07.2013 IT TO20130631
(43) Date of publication of application: 28.01.2015
(73) Proprietor: Vitop Moulding S.R.L., 15100 Alessandria (IT)
(72) Inventor: Nini, Diego, I-15100 Alessandria (IT)
(74) Representative: Garavelli, Paolo

(56) References cited:
- WO-A1-2011/006212
- GB-A- 2 307 269

## Description

The present invention refers to a delivering tap made of plastic material for beverages with gas (for example beer, Coca Cola®, Pepsi Cola®, orange juice, Sprite®, Schweppes® etc.) with a high oxygen barrier with two, preferably parallel, inlets (for gas and liquid) to be placed on containers, preferably made of polyethyleneterephtalate (PET), preferably of the "one-way" unidirectional type; the invention further refers to a pre-formed neck with tamper-evident system. The container on which the inventive tap will be placed is preferably obtained through the known "stretch blow molding" technique. Moreover, the invention refers to the above cited container equipped with the above described tap.

The study of a new closure made of plastics (and of the particular geometry of the neck of the associated container), which is wholly capable of being recycled has started from the analysis of the system currently present on the market, in particular called "cornelius keg".

The cornelius kegs of IMI Cornelius Company have been and are unsurpassed market leaders.

The cornelius kegs (also known as "soda keg" or "pepsi keg") are a particular type of keg used for dispensing soft drinks and draught beverages.

The main features of this keg are:
- its elongated shape, which allows being able to insert many kegs inside a refrigerator;
- a wide-mouth opening, which allows being able to perform, also manually, the internal cleaning of the keg;
- a reduced capacity, about 18 liters (or 5 gallons) for the big ones and about 9 liters (or 3 gallons) for the small ones.

Basically, these kegs are divided into two categories, according to the connection type: "ball lock" (or Jolly) and "pin lock".

The "cornelius keg" operates very simply.

The keg head, which is made of steel/aluminum, is equipped with a main trapdoor useful for the internal washing of the container and of two connections (which can be, as previously stated, "ball lock" or "pin lock"). One operates as inlet for gas (where CO2 or nitrogen can be put) and the other one as outlet for liquid.

A drawing tube is always connected (inside the container) to the liquid outlet, and collects liquid pushed by the pressure on the bottom, in order to enable completely emptying the keg.

This type of container however has various problems:
- the cornelius keg can be re-used and is very costly, and has no tamper-evident systems which protect the beverage therein;
- the kegs are composed of many costly parts (some need to be replaced at every use);
- the cornelius kegs can be re-filled, since their closures has no tamper-evident systems, and therefore products (beverages) not certified by their manufacturing companies could sometimes be put on the market;
- being re-usable, the containers must necessarily, after their use, go back to the filling center to be washed and sanitized;
- the consumer must pay a high amount of money as caution for the vessel when he purchases the beverage in these kegs;
- the manufacturer, too, pays a high amount of money, since he will have to support expenses to transport the full vessel, but also to take back the empty vessel to the company;
- moreover, the managing and washing costs are also paid by the end customer;
- at "carbon footprint" and ecologic level, the cornelius keg has an heavy impact on the environment, due to transport (of the full keg and return of the empty keg) and to washing (with strong uses of water and disinfectants);
- the cornelius keg has several pieces which must necessarily be changed at the end of every use (since the cornelius keg, as previously stated, can be re-used, obviously after its washing and sterilization);
- the pieces which normally are changed at every use are: CO2 tube, internal valve, Jolly OR-ring, OR-ring, red taps for handle, Jolly connections, safety valve, cover OR-ring. All described components have OR-rings and small springs therein; the elastic and mechanical properties of these components, with their use and with time, can worsen and therefore impair the pressure seal;
- moreover, a normally used keg has gaskets used for the previously contained product, which therefore could alter the taste of the beverage inserted afterwards; a change of the O-rings is obliged to have kegs which are always clean and efficient.
- the cornelius kegs, being re-usable, must necessarily go back to the filling center, must be disassembled and sterilized, and moreover it is necessary to change all O-rings: therefore, there will be high managing costs both on the full keg, and on the used "return" keg;
- there is a single warranty seal (which also protects the two connections from dirt and dust) : it is a big-sized tap which covers the area of the two connections and is fastened with a warranty band/seal only after its filling. Once having removed the tap (after the first use), if stored, it can be re-used by a possible counterfeiting person (after having filled-in again the keg with a different product), and again blocked with a new band, certifying with the same "regenerated" warranty seal with a new blocking band, actually a non-original product;
- since there are no recognition signs on the keg body, it is not easy, above all for the end user, to recognize at first sight the connection for gas from the one for liquid: many times the connections are reversed and therefore the system does not work and gets blocked, thereby requiring the assistance intervention (additional costs).

WO 2011/006212 discloses a delivering tap according to the preamble of Claim 1.

Object of the present invention is solving the above prior-art problems, by providing a delivering tap for keg-type containers, preferably made of PET and developed by the market as an eco-friendly, cheap alternative to metallic kegs for draught beverages.

Such keg-type beverage containers are light-weight, made of PET which can be recycled, which has been designed for a one-way use, and therefore does not need their re-collection to wash and fill them again: at the end of their use, they are disposed of in the plastic recycling container.

The keg is usually available with one-way taps, at low cost, which allow being connected to existing delivering systems, for example for draught beers.

The keg made of PET offers a meaningful discovery in selling and marketing volumes of beer, wine and other beverages.

It opens up new channels and markets, and provides for a change in environmental performances - such as reducing costs and improving cash flows.

The advantages of the keg made of PET with respect to metal kegs include the total property costs, a reduced environmental impact, new market opportunities and easier short-term response regarding demand peaks and shortages.

There are potentially big savings in invested chapital, removing the need of keeping a 'fleet' of metallic kegs.

Removing the fleet, high sums can be freed linked to this "good", and remove the constant expense of replacing damaged, lost or stolen kegs.

Moreover, there is no more the need of keeping the costly systems for tracking the metallic kegs.

The key environmental benefits of kegs made of PET include: low material use, with respect to disposable metallic kegs and other one-way kegs, and light-weight construction, which reduces environmental impacts.

Moreover, there is more flexibility in choosing the liters of liquid to be transported (nowadays, liters are fixed and pre-set).

The kegs made of PET are completely and easily adapted to be recycled, satisfy all essential requirements covered by EC regulations, among which suitability both for mechanics, and for 'energy from recycling wastes'.

Using kegs made of PET, there are real benefits for end users.

One of the biggest advantages is the reduced storage space necessary for PET kegs: safely storing empty metallic kegs to prevent them from being stolen before being collected is a problem in many sales points.

As previously stated, the PET kegs can be easily squashed once they are empty, to then place them in a basket with other recycled plastic materials.

These PEG kegs, to comply with the above mentioned features imposed by the market, need a connection tap which can be adapted to existing delivering systems present in bar and other places, etc., which is compatible with PET kegs (therefore made of recyclable plastic etc.).

Usually, the connection/delivering tap is connected by engagement, by screwing on a thread and/or sometimes also welded (thermally or with ultrasound).

The delivering tap can have different types of connections depending on the delivered product, or on the dispensing devices to which it will be addressed: the known and most widespread types of connections are type D, type S, type A, type G, type U, and type M.

Currently, in the market of PET keg containers, there are many proposals as regards practically all types of the above connections, proposed, for example, by company PETAINER (www.petainer.com) and by company KEYKEG (www.keykeg.com), but there is no plastic tap (and therefore dedicated to a one-way use) which synthesizes in a single closure the double connection with two turrets of the Cornelius type, with two separate connection turrets, one for gas (inlet) and one for liquid (outlet).

And above all there is no tap with two turrets of the cornelius type which solved the above mentioned problems.

A further object of the present invention is solving the above problems, by providing a delivering tap with double turret of the Cornelius type (with chances of having both the connection of the pin lock type, and the one of the ball lock type by changing only some components of the injection mold which will produce the part with the two turrets in two versions in a single mold, thereby obtaining less production costs and consequently a cheaper end product) that is equipped with warranty seals which prove its unauthorized opening, and of tamper-evident means which prevent opening again the container for a secondo unauthorized filling (unless the tap is destroyed), and which at the same time is equipped with a main head (with the two connection turrets) made in a single piece, but which is different from the main screwing body, in order to also give the chance of differentiating the used plastic materials and allow using, for the main piece, the piece that will then perform the actual liquid seal, made of a material with high oxygen barrier. The tap will be recyclable and therefore eco-friendly.

Another object of the present invention is providing a tap as mentioned above in which a closure is created by reducing (and simplifying the geometry in order to have an injection mold which produces the very easy and therefore less costly part) the number of pieces, simplifying its assembly and its related final cost with respect to the existing solution of the aluminum keg.

A further object of the present invention is providing a tap as mentioned above which has an immediate aesthetic and geometric location system of the two connections for liquid and gas, by the end customer and the filling center.

A further object of the present invention is providing the bottle neck with particular internal elements (geometries) which, coupled with the elements (geometries) present on the tap, will make the tap not unscrewed and therefore reusable a second time (tamper-evident tap + tamper-evident present on the container neck (also called herein below "carafe"), but also external geometries which will be coupled with the external geometries of the main body (which in turn will be connected to other closure parts) and will generate a double tamper-evident system (first system (internal geometries of carafe neck + tap geometries with flexible wings) + second system (external notches on carafe neck + flexible geometries on main tap body)).

The above and other objects and advantages of the invention, as will appear from the following description, are obtained by a delivering tap and a container equipped with such tap as claimed in the respective independent Claims. Preferred embodiments and non-trivial variations of the present invention are claimed in the dependent Claims.

It is intended that all enclosed claims are an integral part of the present disclosure.

The present invention will be better described by some preferred embodiments thereof, given as a non-limiting example, with reference to the enclosed drawings, in which:

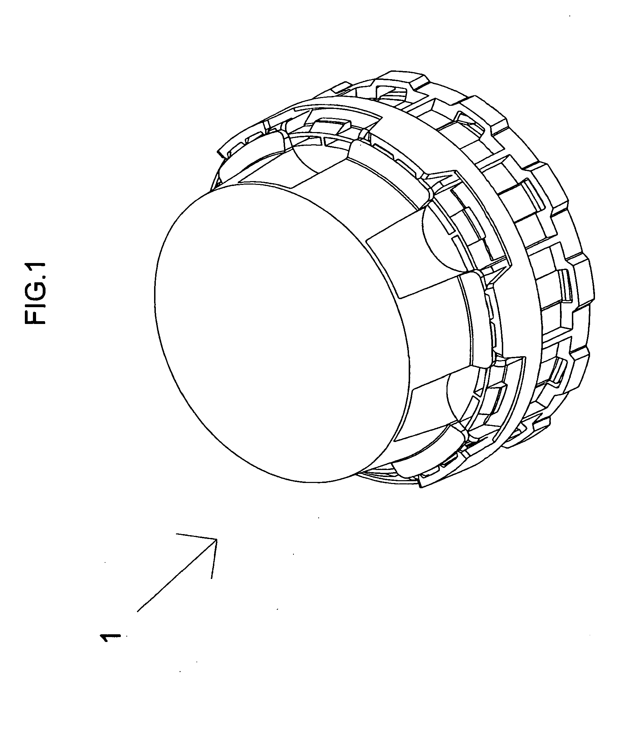

- Figure 1 is a perspective view of an embodiment of the tap according to the present invention;

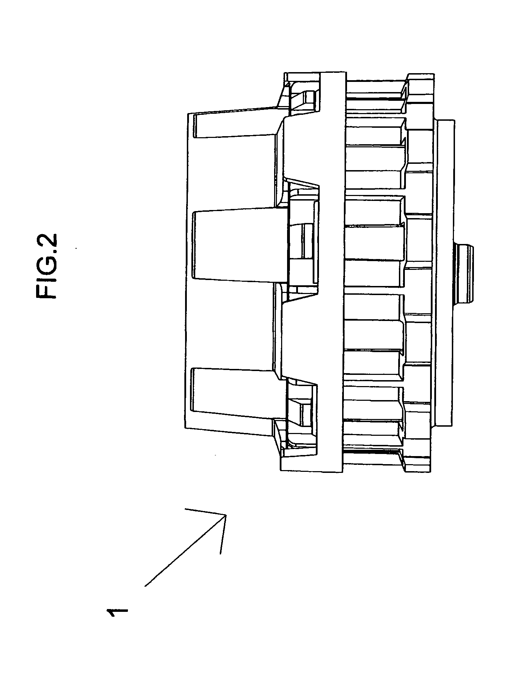

- Figure 2 is a side view of the tap of Figure 1;

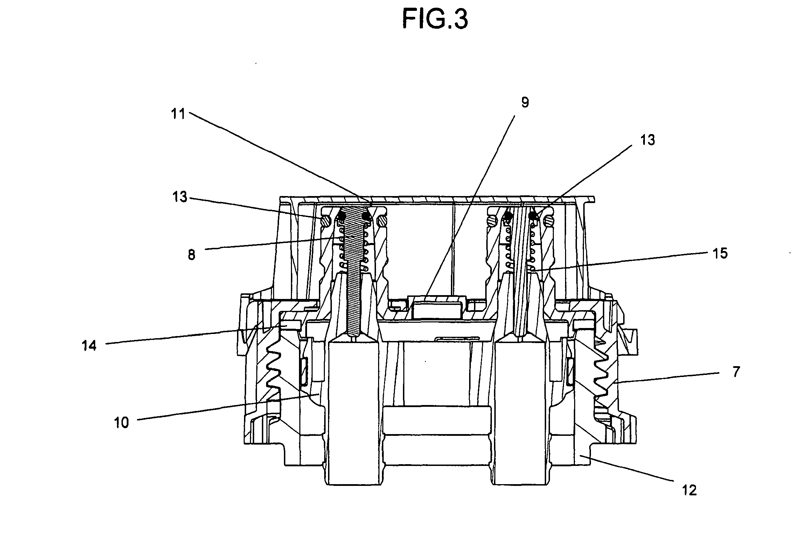

- Figure 3 is a sectional view of the tap of Figures 1 and 2;

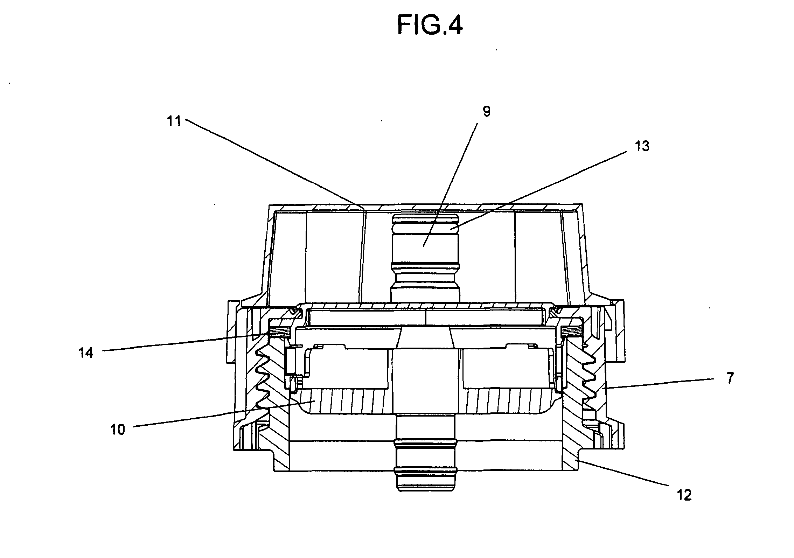

- Figure 4 is a sectional view of the tap of Figures 1 and 2;

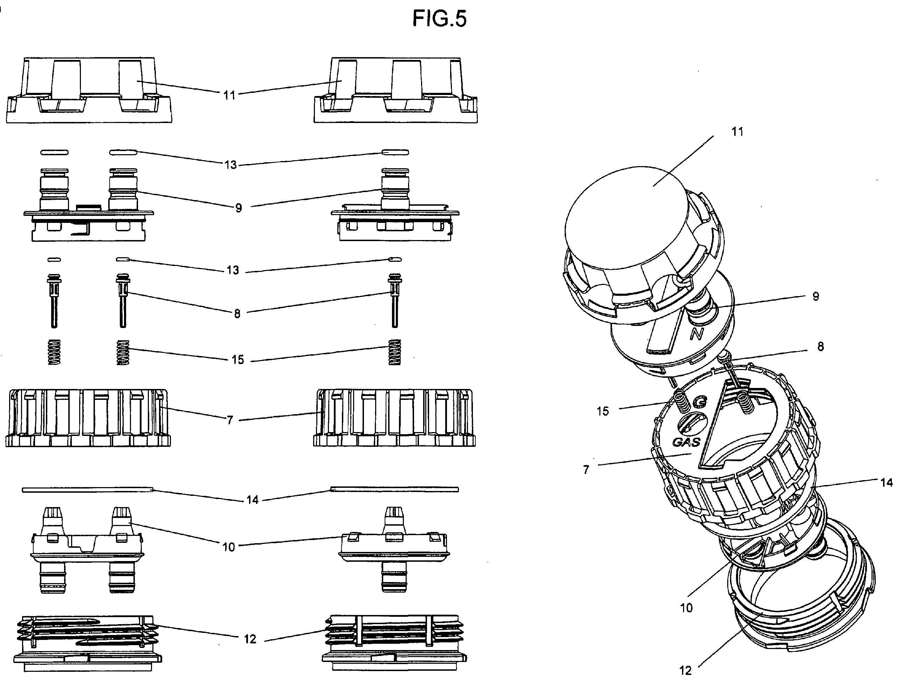

- Figure 5 is an exploded view of the tap of Figure 1;

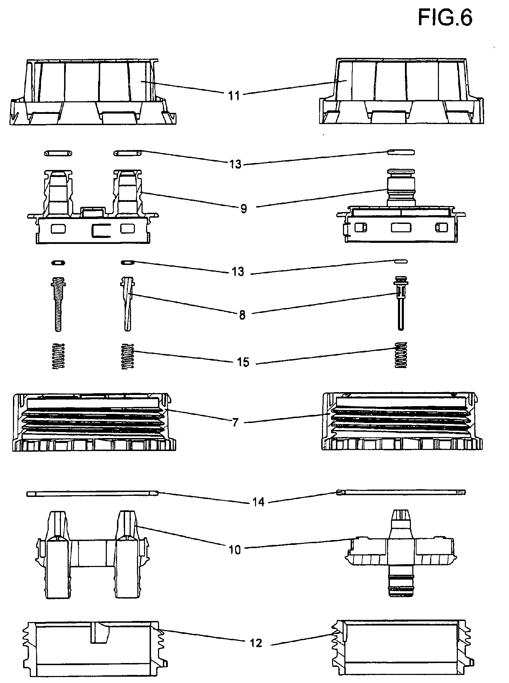

- Figure 6 is an exploded sectional view of the tap of Figure 1;
- Figure 7 is a view of the main body of the inventive tap;
- Figure 8 is a view of the internal piston of the inventive tap;
- Figure 9 shows the upper part of the inventive tap with the two turrets;
- Figure 10 is a view of the lower part of the inventive tap;
- Figure 11 is a view of the warranty seal for the inventive tap; and
- Figure 12 is the view of the carafe neck to which the inventive tap is applied;

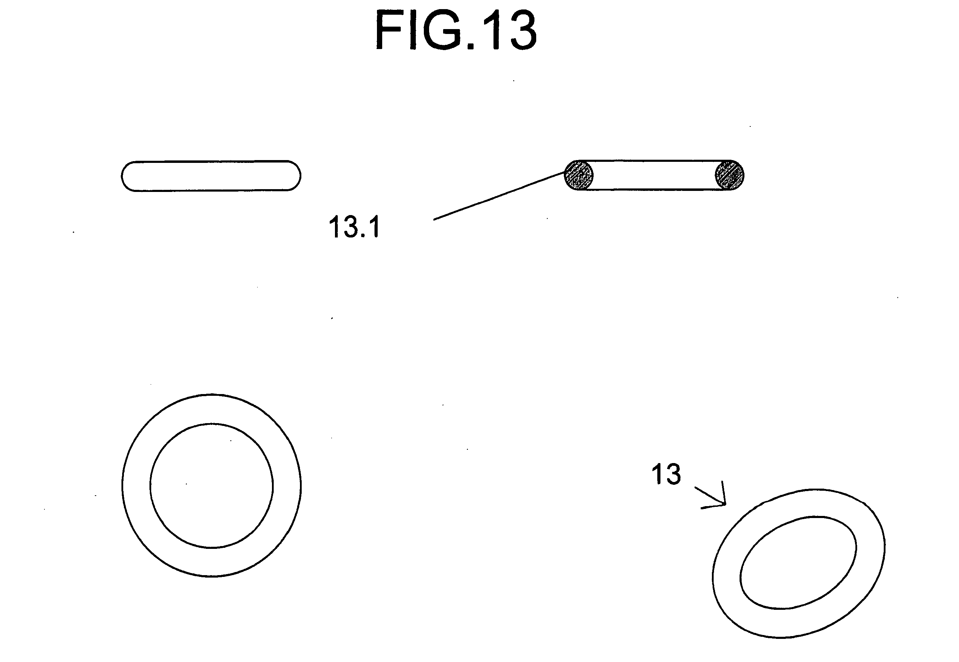

- Figure 13 are views of the O-ring with circular section of the inventive tap;

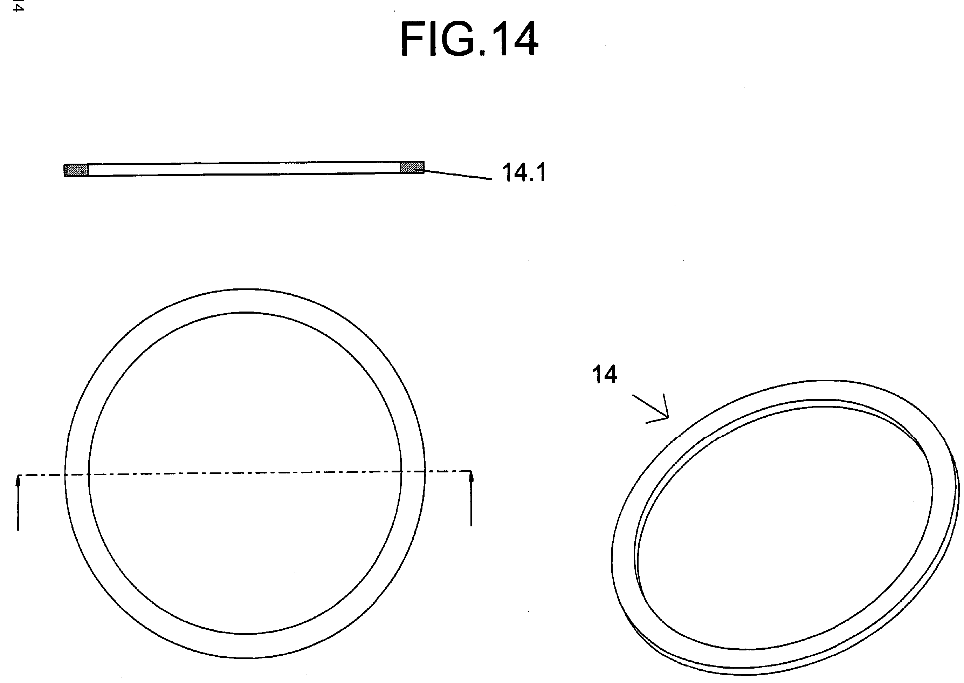

- Figure 14 are views of the gasket with rectangular section of the inventive tap; and

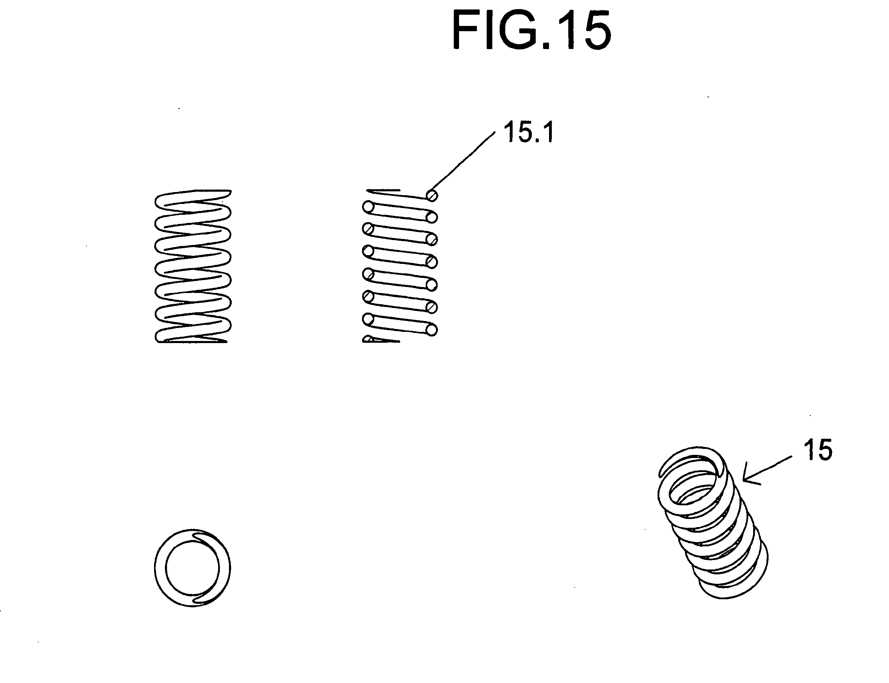

- Figure 15 is a view of the stainless steel spring of the inventive tap.

With reference to the Figures, a preferred embodiment of the tap 1 of the present invention is shown and described. It will be immediately obvious that numerous variations and modifications (for example related to shape, sizes, arrangements and parts with equivalent functionality) could be made to what is described, without departing from the scope of the invention as appears from the enclosed claims.

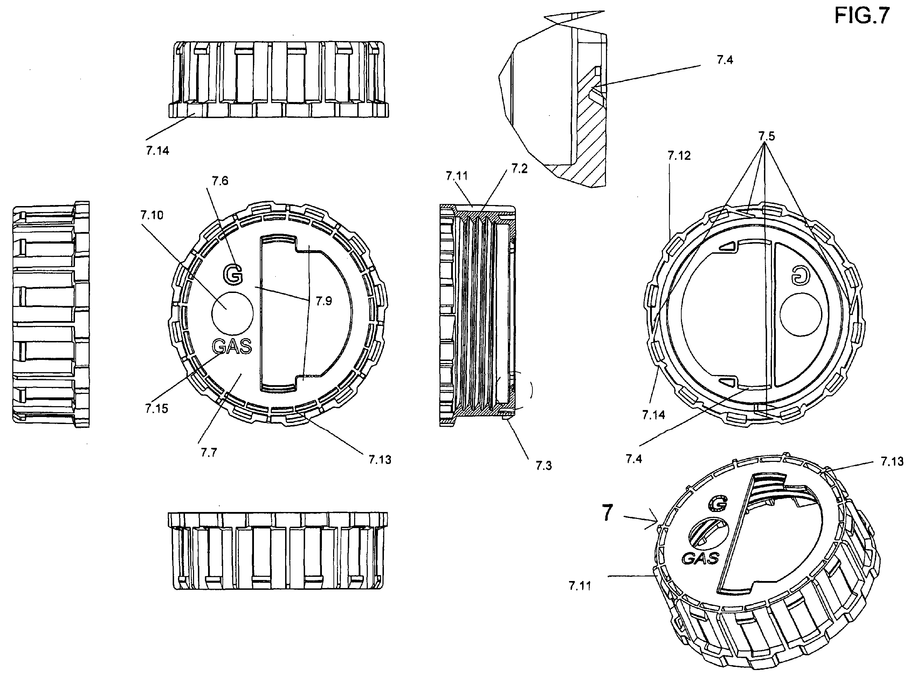

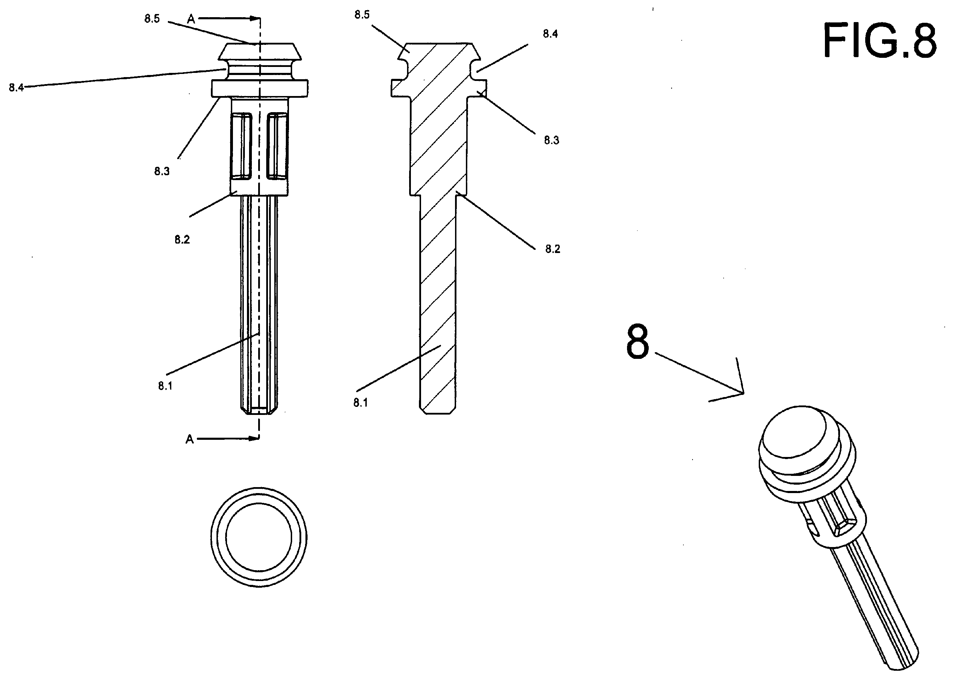

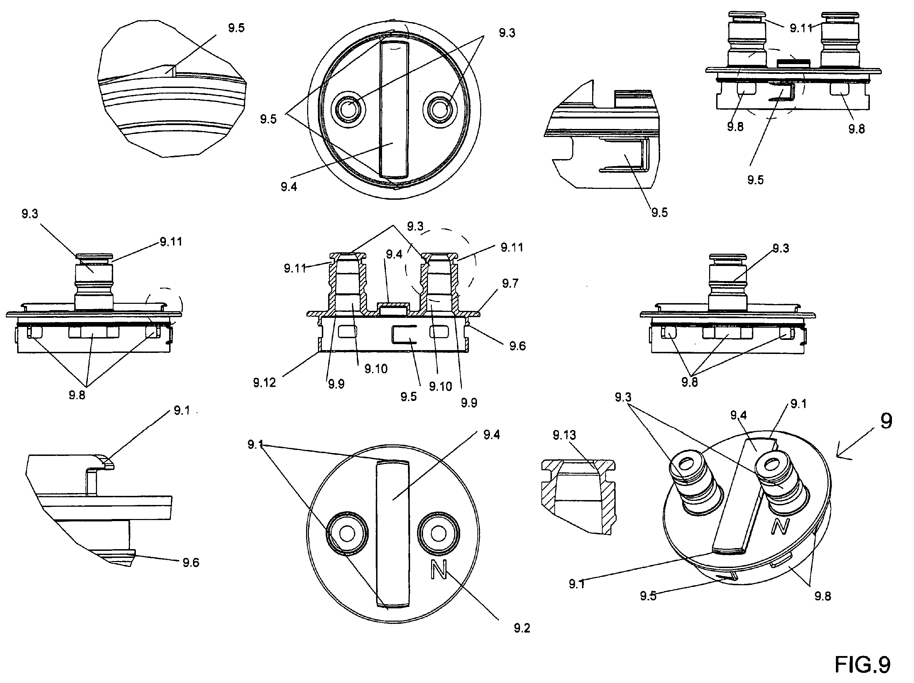

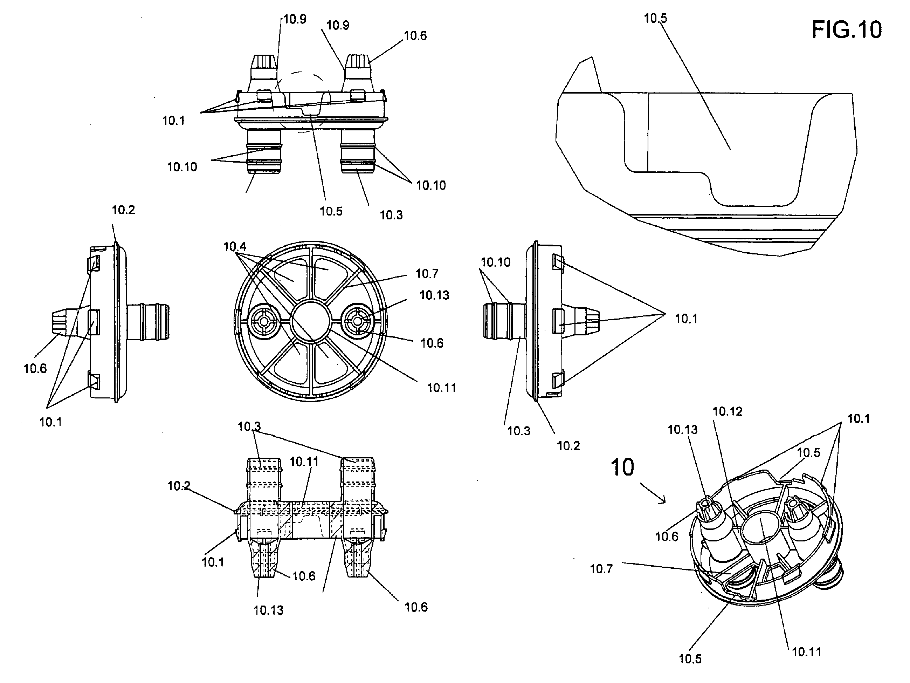

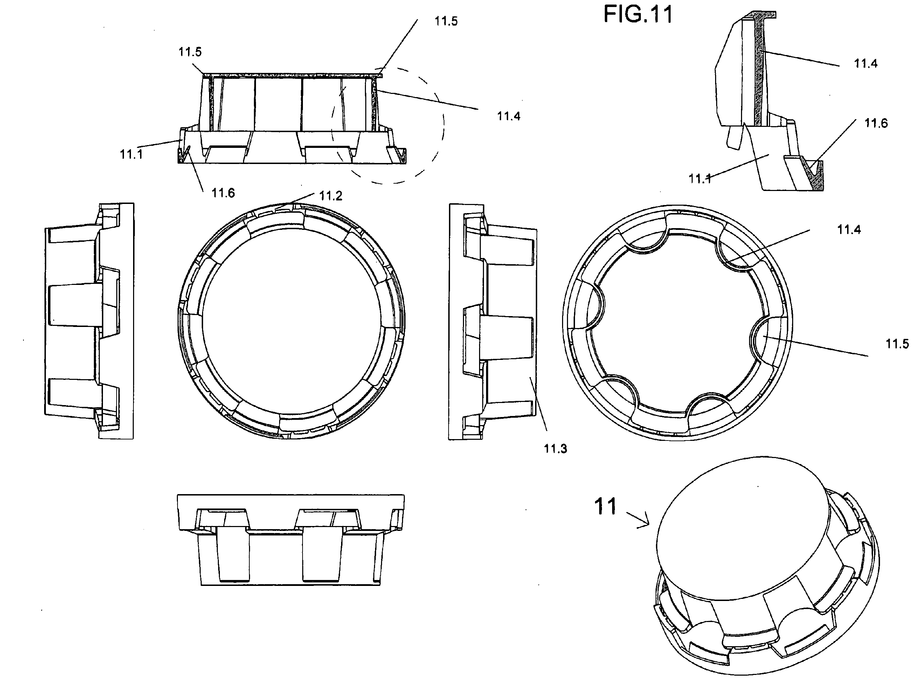

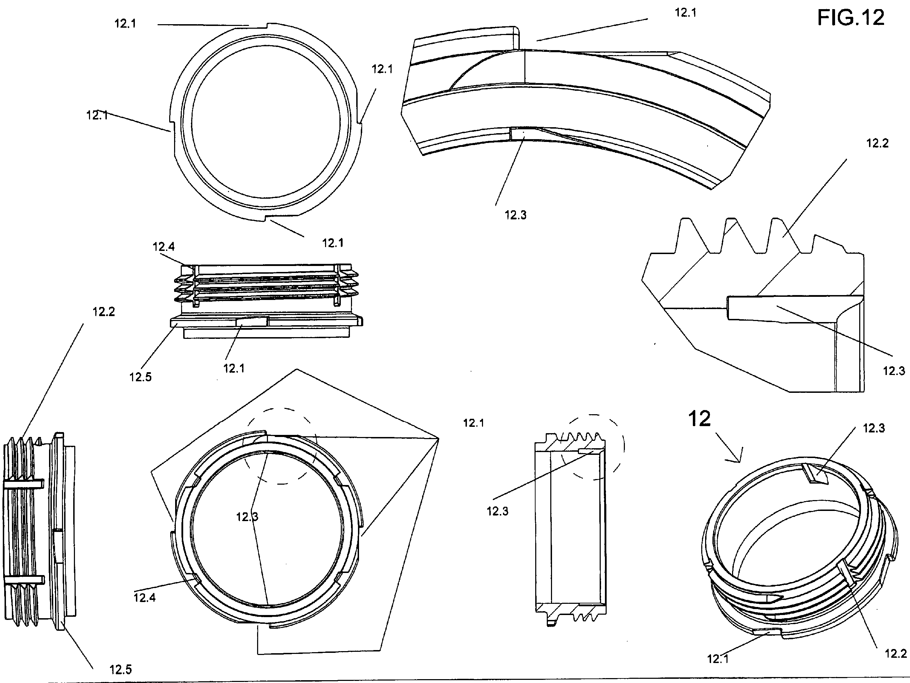

According to the Figures, the improved delivering tap/connector 1 of the invention, in particular for a container for liquids of the keg type made of polyethylenterephtalate (PET) (not shown), substantially comprises:
- a main body 7 (shown in detail in Figure 7) with an elongated shape, which is used for blocking the covering device 9 (shown in detail in Figure 9 and described below) (and the other components connected to the covering device 9 itself) on the neck 12 of a carafe of the keg type (Figure 12) and for providing the correct "pull" to the head gasket with rectangular section in order to have a perfect operating seal between tap and container; the body 7 has connecting means 7.2 (preferably a fastening threading) to the carafe, adapted to stably connect with the geometry of the neck 12.2; fastening means 7.3 for the warranty seal shown in Figure 11 due to the flexible teeth 11.6; fastening means 7.4 to the covering device 9 due to small teeth 9.1 obtained therein; tamper-evident means 7.5 which are adapted to be anchored on the elements 12.1 present on the neck of the carafe; a "full" area 7.6 with letter "G" evidenced, which, once having assembled the tap 1, considering that the below part of the covering device 9 will have a different color with respect to the body 7, will remain in evidence, accurately pointing out which of the two turrets 9.3 is dedicated to the gas connection ("G"); moreover, due to the fact of having a full area 7.7 and an empty half-circle area 7.8, and always exploiting the different color of the two components covering device 9 and body 7, there will be a strong evidence of the two halves with two different colors, which will point out the two different connections (gas "G" and liquid "N"); in any case, a writing 7.15 is present on the body 7, "reinforcing" the letter "G", to extremely safely point out which of the two connections will be dedicated to gas. There is moreover a geometry with ribs 7.11, useful to have a grasping area necessary for screwing the tap 1 assembled on the neck 12; moreover, there are strengthening means 7.13 and means 7.14 for implementing the grasping area; finally, there are transmitting means 7.9 of the circular screwing motion which transmit the screwing motion to the tap 1 assembled onto the covering device 9 due to the geometry 9.4, which "collects" the circular screwing motion, and consequently transmits it to the other components assembled on the covering device 9;
- at least one covering device 9 (better shown in Figure 9), which is composed of a body with two turrets 9.3 (which could be with connection geometry both of the pin ball type (shown in the drawing), and of the pin lock type (not shown)); the device 9 is willingly divided from the main body 7 since, being the main part of the delivering device/connector, which will "press" a gasket 14 with rectangular section, which in turn will be with pressure on the neck 12 of the container due to the body 7 generating the main seal of the system, will have to have oxygen permeability features, in addition to consistent mechanical properties, since it will have to support internal pressures: therefore, it will be possible to use particular high-performance plastic materials. In this way, it will be possible to produce the main piece with two turrets 9.3 with specific materials; moreover the division from the main body 7 allows molding the covering device 9 with a different color, in order to point out the connection dedicated to liquid (once the tap 1 will be assembled with the body 7); to differentiate the connection for liquid, there will also be letter "N" 9.2; a geometry is present between the two turrets 9.3 on which two undercuts (fastening teeth) 9.4 are obtained, which will be used to be stably fastened to the body 7 by means of the means 7.4 with flexible teeth; (the geometry between the two turrets 9.3 has the additional purpose of receiving the motion transmitted by the main body (circular screwing motion) by means of the geometries 7.9 and of transmitting the circular screwing motion to all other components connected to the geometry of Figure 9. The geometries 7.9 will "push" in rotation the device with two turrets shown in Fig. 7. On every turret seats 9.11 are externally obtained, which will be used as housing of the two sealing O-rings 13, which will seal the external connectors (PIN LOCK or PIN BALL). The lower elongated part has numerous geometries obtained on the elongated cylinder: the sealing means 9.6 whose purpose is keeping the O-ring 14 with rectangular section in place; the disk 9.7 adapted to transmit the pressure given by the body 7 to the covering device 9 once having screwed it; connection slits or holes 9.8 which will be coupled with flexible fastening means obtained on the bottom 10 by means of the flexible teeth 10.1 (shown in Fig. 10 and described below); and at least two flexible wings 9.5, which, when screwing, will be adapted to the internal diameter of the container neck 12 and, once having reached the right position, will "snap" on the two internal geometries 12.3 of the carafe neck 12, blocking from inside the possible attempt of counterfeit / removal of the closure once having screwed it. The fact of having a tamper-evident geometry inside the system provide more warranties, since it cannot be reached and above all is protected by the first external tamper-evident system 7.5 between body 7 and external geometry 12.1 of the neck 12 (the external tamper-evident system will be obtained due to the geometries with flexible teeth present on the main body 7.5 and the fastening geometries created outside the neck carafe 12.1); moreover, there are chamfered "lead-in" geometries 9.9 to enable the connection of the turrets of the bottom 10 (described below) and connection/sealing cylinders 9.10 which will fasten and seal the cylindrical geometries 10.9 of the bottom (described below);
- at least one bottom 10 (shown in detail in Figure 10), which is composed of a body whose primary function is pre-loading and blocking the springs inserted in the stem 8 and resting, in their upper part, onto the small plate 8.3 which will be below the pistons 8 (described below with reference to Figure 8); the two guiding cylinders 10.13 obtained between the cross-shaped ribs 10.6 which will be used also as bearing for the lower part of the spring (which, as previously stated, abut in their upper part onto the small plate 8.3) and present on the two connection turrets of the bottom will guide the pistons when opening; moreover, the cross-shaped ribs 10.6 connected to the guiding cylinder of the stem of the piston 8.1, cooperating with the geometry 8.2 of the piston 8, when opening the tap 1, will operate as descent stopper of the piston 8, that thereby will be able to vertically move only by certain millimeters, and therefore will be blocked, enabling the opening of the piston 8 present inside the connections (external to the system and which will be used to connect the inventive tap 1 to dispensing devices) which will be connected with the turrets 9.3, to enable the flow of gas or liquid, according to the connection which is being taken into account. In practice, the piston 8 of the inventive tap 1 will drop by some mm (pushed by a stem which is inside the "external connector" connection) and therefore will be blocked. Now, once having blocked the stem of the inventive tap 1, opening will be allowed or the stem present in the "external connector" connection, which in practice will be pushed by the blocked stem. Therefore, finally, when the external connector will be on the turret 9.3, it will have ducts (those present on the external connector and those present on the turret 9.3) completely open), allowing to deliver liquid from existing dispensing devices. Moreover, the two taps 10.3 will allow the connection of the drawing tube, which will be put under the turret-type connection where liquid will pass; the taps 10.3 are equipped with circular ribs 10.10 which are used (going to interfere with the drawing tube) to block and seal the drawing tube itself; below the crosses 10.6 present on every turret 9.3, there is a sealed engagement area 10.9, which will seal onto the geometry 9.10 of the covering device 9.1, and in this way will generate separate ducts (one for air and one for liquid); the bottom 10 will be engaged by means of flexible fasteners 10.1 obtained on the same bottom 10, with the geometries (connection slits 9.8) present on the covering device 9. The structure of the bottom 10 is enlightened by holes 10.4, but structurally stiffened by a cylinder 10.11 and by ribs 10.12 which increase its rigidity; there is an abutment area 10.2 which will possibly collide when assembling the two components 9 and 10 which will operate as stopper geometry to have a constant assembling height with the cylinder 9.12 of the covering device 9; the bottom 10 will have a side recess on the element 10.5 which will in turn be coupled with the covering device 9, in order to free the rear area of the flexible wings 9.5, allowing their flexure (which is driven by the internal diameter of the carafe neck which will interfere with the flexible wings, till a complete tightening height is reached for the tap onto the carafe) when screwing (or snapping) onto the neck 12, and therefore the following engagement onto the geometry 12.3 which provides the internal tamper-evident;
- at least one piston 8 (shown in detail in Figure 8), which is the element with elongated shape on which the sealing O-rings 13 will be placed in suitable recesses obtained on the piece 8.4, the O-rings 13, due to the thrust of the small plate 8.3 below where the upper part of the spring 15 abuts, whose lower part rests on the crossing 10.6 (when everything will be assembled, the spring will push the piston of Figure 8, on which an O-ring with circular section will be assembled, sealing onto the inclined plane present on every turret 9.13), will generate the air-tight closure and/or the opening of the turrets 9.3. The piston 8 has a seat 8.4 for the O-ring 13 with circular section, with chamfered head 8.5 which will be adapted to the internal outline of the turrets 9.3, un upper abutment area, or small plate 8.3, for the metallic spring 15 (the lower abutment area 10.6 is on the bottom 10); there will be a mechanical stopper 8.2, which limits the excursion of the piston 8 to few mm when opening, abutting against the geometry 10.6 of the bottom 10. A vertical crossing-type guide is also present;
- at least one seal 11 (better shown in Figure 11): it is a body adapted to protect the turrets 9.3 of the covering device 9 after its filling, and possibly adapted to support the pallet weight; it is a tamper-evident device which connects the main body to the tamper evident ring (which will be connected to the main body) with breaking jumpers which, once having opened the seal for a first time, will point out the first, performed opening, which allows determining the integrity of the packaging by means of a tamper evident ring-type system 11.1 and of breaking jumpers 11.2; moreover, there is a removable cover 11.3 (connected to the tamper evident ring by means of breaking jumpers) with geometries 11.4 with circular section which increase the structural resistance of the part; finally, there are grasping areas 11.5 for facilitating the grasp for removing the seal 11.3; the tap 1 is engaged with a system with flexible wings 11.6 on the geometries 7.3 obtained on the body 7;
- at least one neck 12 of a carafe (shown in detail in Figure 12): it is a bottle neck 12 with particular geometries which will be preferably associated with the inventive tap 1; it is an elongated body 12 equipped with a thread 12.2 with safety device 12.4 for exhausting gas if a forced and accidental opening occurs (after having violated all, previously exposed, internal and external tamper-evident systems), which allows, in case of forced unscrewing, discharging the internal pressure of the container outside before the whole unscrewing is complete and therefore the tap 1 is "free" of moving and possibly hurting (still pushed by the internal pressure) the users unscrewing it; it is further equipped with: an external ring 12.5 possibly adapted to support an handle (not shown); external blocking tamper-evident means 12.1; internal tamper-evident means 12.3, which will operate, once having screwed the tap 1 onto the neck 12, with the flexible wings 9.5 of the covering device 9.

With the above described arrangement, therefore, according to the invention, a tap 1 for beverage containers is obtained, preferably made of recyclable polyethyleneterephtalate (PET), which is disposable at two ways (one or gas and one for liquid), with geometric/chromatic/visual systems to accurately point out which of the two turrets is dedicated to the gas connection and which to the liquid connection, with internal and external tamper-evident systems and evident tamper seal.

The tap 1 of the invention has a low cost, has two separate, preferably parallel ways (one for gas and one for liquid) (two turrets of tap 1) and with specific geometries which can be adapted to the two systems on the market (pin ball and pin lock) with sealing gaskets which allow the sealed connection to existing systems for dispensing beer, wine and in general all carbonated draught beverages, preferably put in vessels which operate under high pressures.

The solution associated with new one-way plastic containers, preferably made of PET, offers environmental and economic benefits.

The tap 1 of the invention offers economic and ecologic advantages with respect to existing systems on metal kegs and to other plastic variations present on the market (less pieces easier to assemble and less costly, being made of plastics obtained from injection molding).

The tap 1 of the invention, associated with plastic containers, preferably made of PET, offers substantial advantages for beer- and wine-shops and all distributors of carbonated beverages and other keg users - above all when compared with metal kegs.

They have, with respect to standard "steel keg" systems in commerce so far: lower total property cost, reduction of environmental impact, new market opportunities and standard quicker response to short term demands.

The passage from metal cornelius keg to plastic cornelius keg, preferably made of PET, equipped with the tap 1 of the invention, allows saving in terms of capital costs and operating costs.

They are potentially important savings in terms of used capital, removing the need of keeping a long series of keg. Removing the excessive number of kegs allows freeing important sums invested in such "asset" and removes the need of further constant expenses for replacing damaged, lost or stolen kegs.

Moreover, it is not necessary to use costly tracking systems.

Further savings are possible in terms of capital removing the costly and complex cleaning systems of the cornelius kegs.

A higher efficiency is obtained in using the space, as consequence of removing the need of storing a high number of Cornelius kegs when the demand is low, for having them available during demand peaks.

Removing the restitution of used metal kegs, cleaning and re-using costs are reduced. With the Cornelius kegs with two, preferably parallel plastic inlets, preferably made of in PET, non only the container but also the valve and taps 1 are disposable - total absence of restitution and cleaning costs.

Strong savings are also guaranteed in terms of logistics, non only removing the restitution costs provided in case of metal cornelius kegs, but also reducing the delivery costs of filled cornelius kegs. The cornelius keg made of PET are lighter than the metal cornelius keg which contain the same volume of liquid. Consequently, a greater number of kegs can be loaded on an exiting vehicle.

The main components of taps 1 are wholly recyclable with dry wastes or following the normal plastic recovery cycle, as provided for individual production systems and plants.

The tap 1 of the invention is designed to allow bar and restaurant owners to use the keg exactly in the same way as metal cornelius kegs.

Without changing any of the tools available in a bar or cellar, they can immediately benefit from the advantages of the plastic cornelius keg on which the tap 1 of the invention will be placed: reduced weight, easy storage and recyclability.

The availability of a two-way tap 1 produced under hygienic conditions means that users of the cornelius keg with inventive tap 1 will have less worries for health and safety, and less work to keep taps1 and apparatuses clean. All components of the Cornelius keg and taps 1 will be appoved for foodstuff use.

Other features of the inventive tap 1 are:
- since the covering device 9 is divided from the main body 7, there is the chance of molding with highly technical materials only the major part of the tap 1, and non the whole piece, actually wasting the technical material for geometries for which certain features are not useful, and therefore actually saving in the use of such highly costly materials, for example increasing the oxygen barrier;
- when the cornelius keg has been filled with a liquid, it will be possible to place a tamper evident element or warranty seal which will hygienically protect and help locating the kegs which have already been used (tamper-evident). Moreover the warranty seal will have such a geometry as to allow stacking the kegs;

- the tap 1, as previously stated, will be one-way like the associated container, and this will allow having many advantages at economic and ecologic level (not managing the used kegs which before were returned/washed (sterilized and again filled). The tap 1 for such purpose will be formed of various recyclable plastic components (only the two internal springs are made of stainless steel);
- the system will allow molding the main piece (the one with the two turrets) made of PET (for example), therefore with a product similar to the container on which it will be assembled. Above all, there will be the chance of molding the piece with the two parallel turrets with a material with high oxygen barrier;
- the tap 1 of the invention has internal product tamper-evident systems (two sealing areas), in order to protect the integrity and quality of the internal beverage (this feature is not guaranteed in current kegs, since there are no tamper-evident geometries of this type). In this way, it is guaranteed that the keg will not able to be filled-up again (after its first use), unless the tap 1 is destroyed, but then it will be very simple for a user to locate the counterfeited kegs.

The assembling of the inventive tap 1 on a plastic container (preferably made of PET) occurs in the following way:
1) the tap 1 will be provided to the distributor divided from the tamper evident seal 11, which will then be placed as guarantee of product integrity and originality, after having filled-in the plastic keg;
2) the tap 1 will be placed for screwing (or with a snap, solution not shown, but that, being wholly equivalent to the above described one, falls within the scope of the present invention) before its filling on the container, also as warranty of internal hygiene;
3) when screwing, the different types of tamper-evident elements 7.5 and 9.5, present on the body 7 and on the covering device 9, will be activated, due to the elements 12.1 and 12.3 present on the carafe neck 12.2;
4) once screwed, unless the tap 1 is destroyed, the closure will remain fastened to the carafe neck 12;
5) the filling step will therefore start, connecting, by means of the connections in commerce (PIN BALL and PIN LOCK), and then the warranty seal 11 will be placed.

## Claims

1. Delivering tap (1) with double turret (9.3) for a container for liquids of the keg type made of plastic material, preferably polyethylenterephtalate, PET, comprising:
• a main body (7);
• at least one covering device (9) placed at a first end of said main body (7) and equipped with at least two turrets (9.3), one for entering gas into said main body (7) and one for exiting liquid from said main body (7);
• at least two pistons (8) contained in said main body (7) and each operatively coupled, with a respective one of said turrets (9.3), by means of O-rings (13), preferably with circular section, assembled in respective recesses (8.4) created on the pistons (8), for driving the opening of a turret (9.3) dedicated to exiting liquid simultaneously with the opening of the other turret (9.3) dedicated to entering gas adapted to push outside the liquid contained in the container;
• at least one bottom (10) placed at a second end of said main body (7) opposite to said first end, said bottom (10) being operatively coupled with said pistons (8) by means of metallic springs (15) assembled on said pistons (8) for driving its operation; and **characterized in that** it further comprises:
• at least one tamper-evident seal (11) placed above and around said covering device (9) in order to prevent an undesired external access to said turrets (9.3).

2. Container for liquids of the keg type made of plastic material, preferably in polyethylenterephtalate, PET, **characterized in that** it comprises:
a) at least one delivering tap (1) with double turret (9.3) according to claim 1;b) at least one neck (12) of the container of the keg type adapted to be operatively connected to said delivering tap (1) and equipped with internal (12.3) and external (12.1) tamper-evident means adapted to respectively cooperate with the flexible wings (9.5) of the covering device (9) and the small flexible teeth (7.5), preferably four, obtained on the main body (7) of said tap (1) and adapted to generate the two tamper-evident systems.

3. Container according to claim 2, **characterized in that** said main body (7) is adapted to block the covering device (9) on the neck (12) and to provide the right "pull" to a sealing O-ring (14) in order to have a perfect seal, the body (7) having connecting means (7.2), preferably a fastening threading, to the container; fastening means (7.3) for the warranty tamper-evident seal (11); fastening means (7.4) to the covering device (9), preferably made as flexible teeth; and tamper-evident means (7.5) which are adapted to be fastened to the elements (12.1) present on the neck (12) of the container.

4. Container according to claim 3, **characterized in that** said main body (7) is moreover equipped with a "full" area (7.6) with evidenced indicating means, preferably letter "G", which, once having assembled the tap (1),since the part below the covering device (9) will have a different color with respect to the body (7), remains evidenced, accurately pointing out which of the two turrets (9.3) is dedicated to gas connection, the body (7) being moreover equipped with a full area (7.7) and an empty half-circle area (7.8), and, always exploiting the different color of the two components, covering device (9) and body (7), being adapted to provide a strong evidence of the two halves with two different colors, which will point out the two different connections for gas, G, and liquid, N.

5. Container according to claim 3 or 4, **characterized in that** said main body (7) is further equipped with a geometry with ribs (7.11), useful to have a grasp area necessary or screwing the tap (1) assembled onto the neck (12), with strengthening means (7.13) and means for implementing the grasp area (7.14), and with transmission means (7.9) of the circular screwing motion, adapted to transmit the screwing motion to the tap (1) assembled onto the covering device (9) due to a geometry (9.4).

6. Container according to claim 2, **characterized in that** said covering device (9) is adapted to "press" a sealing O-ring (14), preferably with rectangular section, which in turn will press onto the neck (12) of the container due to the body (7), said covering device (9) being equipped, between the two turrets (9.3), with a geometry on which two undercuts, or fastening teeth (9.1), have been obtained, which will be used for stably fastening to the body (7) by means of the means (7.4) with flexible teeth, the lower elongate part of the covering device (9) having numerous geometries obtained on the elongated cylinder: sealing means (9.6) adapted to keep in place the O-ring (14) with rectangular section; a disk (9.7) adapted to transmit the pressure given by the body (7) to the covering device (9) once having screwed it; connection slits or holes (9.8) adapted to be coupled with fastening means obtained on the bottom (10); and at least two flexible wings (9.5), which, when screwing, will be adapted to the internal diameter of the neck (12) of the container and, nce having reached the right position, will "snap" onto the two internal geometries (12.3) of the neck (12) of the container, blocking from inside the possible attempt of counterfeit/removal of the closure once having screwed it.

7. Container according to claim 2, **characterized in that** said bottom (10), once connected to the covering device (9) due to its fastening slits (9.8) with which flexible teeth (10.1) present on the bottom (10) will engage, will have the function of pre-loading and blocking the two springs, preferably made of stainless steel, which respectively are below the pistons (8), and abutted in their upper part onto the small plate (8.3) of the pistons (8) themselves, and inserted into cylinders (10.13), obtained on every turret (9.3), of the bottom (10) and rested/constrained thereto on the cross-shaped ribs (10.6) of the turrets (10.3) of the bottom (10) in their lower part, the cylinder (10.13) obtained in the center of every turret (9.3) of the bottom (10) being adapted to guide the pistons (8) when opening and closing the two turrets (9.3), and to cooperate with the geometry (8.2) of the piston (8), when opening the tap (1), operating as descent stopper of the piston (8), which will then be able to vertically move only by few millimeters, and therefore will be blocked, making the piston (8), present inside the connections which will be connected to the turrets (9.3), completely open the connections and enable the flow of gas and/or liquid, according to the affected connection.

8. Container according to claim 7, **characterized in that** the two, preferably cylindrical, projections (10.3) of the bottom (10) are adapted to be connected to a drawing tube, which will be put under the turret-type connection a turret where liquid will pass pushed by gas, the fastening tubes (10.3) being equipped with circular ribs (10.10) which are used, making an interference with the drawing tube, to block and seal the drawing tube itself, below the crosses (10.6), on every turret (9.3) cylindrical sealing areas (10.9) being further present, adapted to seal onto the geometry (9.10) of the covering device (9), and in this way to generate separate ducts for air and for liquid.

9. Container according to claim 7 or 8, **characterized in that** the bottom (10) is engaged by means of flexible fastening elements obtained on the same bottom (10), with the connection slits (9.8) present on the covering device (9), the structure of the bottom (10) being enlightened by holes (10.4), but structurally strengthened by a cylinder (10.11) and by ribs (10.12) adapted to increase its rigidity, the bottom (10) being further equipped with an abutment area (10.2) which will possibly collide with the cylinder (9.10) of the covering device (9) guaranteeing its perfect assembling height and the consequent correct assembling of the covering device (9) and of the bottom (10), and of a side recess on the element (10.5) adapted, once coupled with the covering device (9), to free the rear area of the flexible wings (9.5), allowing its flexure when screwing or snapping onto the neck (12.2), and therefore the following engagement onto the geometry (12.3) which provides the internal tamper-evident element.

10. Container according to claim 2, **characterized in that** the piston (8) is the element with elongated shape on which sealing O-rings (13) are placed in respective recesses (8.4), which O-rings (13), due to the thrust of the spring below, are adapted to generate the airtight closure and/or the opening of the turrets (9.3), the piston (8) having a seat (8.4) for the sealing O-ring (13), with chamfered head, which will be adapted to the internal outline of the turrets (9.3), an upper abutment area of the metallic spring, in which the lower abutment area (10.6) is on the bottom (10.1), a mechanical stopper (8.2) adapted to limit the excursion of the piston (8) when opening, by abutting against the geometry (10.6) of the bottom (10), and a vertical crossing guide.

11. Container according to claim 2, **characterized in that** said seal (11) is a body adapted to protect the turrets (9.3) of the covering device (9) after filling, and possibly adapted to support the pallet weight, said tamper-evident seal (11) being adapted to determine the integrity of the packaging by means of a ring-type tamper evident system and of breaking jumpers (11.2), the seal (11) being further equipped with a removable cover (11.3) with geometries (11.4) with circular section adapted to increase the structural resistance of the part, the tap (1) being engaged with a system with flexible wings (11.6) onto the geometries (7.3) obtained on the body (7).

12. Container according to claim 2, **characterized in that** at least the neck (12) is an elongated body equipped with a thread with safety device (12.4) for exhausting gas in case of forced and accidental opening, which allows, in case of forced unscrewing, discharging the internal pressure of the container outside it before the whole unscrewing is complete and therefore the tap (1) is free of moving only when one will be sure that it will be not pushed by the internal pressure which, otherwise, could damage things and people.

13. Container according to claim 12, **characterized in that** the neck (12) is equipped with: an external ring (12.5) possibly adapted to support a handle; external blocking or tamper-evident means (12.1), preferably of the type with four flexible geometries (7.5) of the main body (7) on four external geometries (12.1) of the neck (12) of the container; internal tamper-evident means (12.3), adapted to operate, once having screwed the tap (1) on the neck (12), with the flexible wings (9.5) of the covering device (9).

## Patentansprüche

1. Versorgungshahn (1) mit zwei Steigleitungen (9.3) für einen Flüssigkeitsbehälter aus Kunststoff-Keg, vorzugsweise aus Polyäthylenterephtalat, PETP, der folgendes einschließt:
• Einen Hauptkörper (7);
• Mindestens eine Abdeckvorrichtung (9), die an einem ersten Ende des genannten Hauptkörpers (7) angebracht ist und mit mindestens zwei Steigleitungen (9.3) ausgestattet ist, eine für den Gaseintritt in den genannten Hauptkörper (7) und eine für den Flüssigkeitsaustritt aus dem genannten Hauptkörper (7);
• Mindestens zwei Kolben (8), die im genannten Hauptkörper (7) enthalten und operativ jeweils mit den genannten Steigleitungen (9.3) durch O-Ringe (13), vorzugsweise mit Kreisschnitt, verbunden und in den entsprechenden Hohlräumen (8.4) montiert sind, die an den Kolben (8) erzeugt wurden, um die Öffnung einer Steigleitung (9.3), die für den Flüssigkeitsaustritt bestimmt ist, gleichzeitig mit der Öffnung einer anderen Steigleitung (9.3), die für den Gaseintritt bestimmt ist, und dazu dient, die im Behälter enthaltene Flüssigkeit auszustoßen, zu steuern;
• Mindestens einen Boden (10), der an einem zweiten Ende des genannten Hauptkörpers (7) gegenüber dem genannten ersten Ende angebracht ist, der genannte Boden (10) ist operativ durch Metallfedern (15) mit den genannten Kolben (8) verbunden, die an den genannten Kolben (8) montiert sind, um ihren Betrieb zu steuern;
und **dadurch gekennzeichnet ist, dass** er außerdem folgende Vorrichtungen enthält:
• Mindestens ein gegen Nachahmung geschütztes Siegel (11), das auf und um die genannte Abdeckvorrichtung (9) angebracht wurde, um einen unerwünschten Zugriff auf die genannten Steigleitungen (9.3) von außen zu verhindern.

2. Flüssigkeitsbehälter aus Kunststoff-Keg, vorzugsweise aus Polyäthylenterephtalat, PETP, der **dadurch gekennzeichnet** ist, folgendes einzuschließen:
a) Mindestens einen Versorgungshahn (1) mit zwei Steigleitungen (9.3) gemäß Patentanspruch 1; und
b) Mindestens einen Hals (12) des Behälters Keg, der dazu dient, sich operativ mit dem genannten Versorgungshahn (1) zu verbinden, und der mit internen (12.3) und externen (12.1), gegen Nachahmung geschützten Vorrichtungen ausgestattet ist, die dazu dienen, entsprechend mit den flexiblen Lamellen (9.5) der Abdeckvorrichtung (9) und den flexiblen, vorzugsweise vier, Zähnen (7.5) zusammenzuarbeiten, die am Hauptkörper (7) des genannten Hahns (1) erhalten wurden und die dazu dienen, zwei gegen Nachahmung geschützte Systeme zu erzeugen.

3. Behälter gemäß Patentanspruch 2, der **dadurch gekennzeichnet ist, dass** der genannte Hauptkörper (7) dazu dient, die Abdeckvorrichtung (9) am Hals (12) zu blockieren, und dem O-Dichtring (14) den richtigen "Zug" zu verleihen, um eine perfekte Dichtung zu erhalten, der Körper (7) hat Verbindungsvorrichtungen (7.2), vorzugsweise ein Verankerungsgewinde, am Behälter; Verankerungsvorrichtungen, am Behälter; Verankerungsvorrichtungen (7.3) für das gegen Nachahmung geschützte Garantiesiegel (11); Verankerungsvorrichtungen (7.4) an der Abdeckvorrichtung (9), die vorzugsweise wie flexible Zähne ausgeführt wurden; und gegen Nachahmung geschützte Vorrichtungen (7.5), die dazu dienen, sich an den Elementen (12.1) zu verankern, die am Hals (12) des Behälters vorhanden sind.

4. Behälter gemäß Patentanspruch 3, der **dadurch gekennzeichnet ist, dass** der genannte Hauptkörper (7) außerdem mit einem "vollen" Bereich (7.6) mit hervorgehobenen Anzeigemitteln ausgestattet ist, vorzugsweise mit dem Buchstaben "G", der nach der Montage des Hahns (1) unter Berücksichtigung der Tatsache, dass der Teil unter der Abdeckvorrichtung (9) eine andere Farbe als der Körper (7) hat, hervorgehoben bleibt und genau angibt, welche der beiden Steigleitungen (9.3) für den Gasanschluss bestimmt ist, der Körper (7) ist außerdem mit einem vollen Bereich (7.7) und einem "leeren" Halbkreisbereich (7.8) ausgestattet und dient, jeweils durch die Nutzung der unterschiedlichen Farbe der beiden Komponenten der Abdeckvorrichtung (9) und des Körpers (7) dazu, die beiden Hälften mit den beiden unterschiedlichen Farben deutlich hervorzuheben, die die beiden unterschiedlichen Anschlüsse für das Gas, G, und die Flüssigkeit, N, angeben.

5. Behälter gemäß Patentanspruch 3 oder 4, der **dadurch gekennzeichnet ist, dass** der genannte Hauptkörper (7) außerdem mit einer Rippengeometrie (7.11) ausgestattet ist, die nützlich ist, um einen Greifbereich zu haben, der für das Anschrauben des am Hals (12) montierten Hahns (1) notwendig ist, mit Verstärkungsvorrichtungen (7.13) und mit Erweiterungsvorrichtungen (7.14) des Greifbereichs sowie mit Übertragungsvorrichtungen (7.9) der kreisförmigen Anschraubbewegung, die dazu dienen, die Anschraubbewegung dank der Geometrie (9.4) an den an der Abdeckvorrichtung (9) montierten Hahn (1) zu übertragen.

6. Behälter gemäß Patentanspruch 2, der **dadurch gekennzeichnet ist, dass** die genannte Abdeckvorrichtung (9) dazu dient, einen O-Dichtring (14), vorzugsweise mit rechteckigem Schnitt, "anzudrücken", der seinerseits am Hals (12) des Behälters dank des Körpers (7) unter Druck steht, die genannte Abdeckvorrichtung (9) ist zwischen den beiden Steigleitungen (9.3) mit einer Geometrie ausgestattet, an der zwei Unterschnitte oder Verankerungszähne (9.1) erhalten wurden, die dazu dienen, sich durch die Vorrichtungen (7.4) mit flexiblen Zähnen fest am Körper (7) zu verankern, der untere längliche Teil der Abdeckvorrichtung (9) hat zahlreiche Geometrien, die am länglichen Zylinder erhalten wurden: Dichtvorrichtungen (9.6), die dazu dienen, den O-Ring (14) mit rechteckigem Schnitt in Position zu halten; eine Scheibe (9.7), die dazu dient, den vom Körper (7) an die Abdeckvorrichtung (9) nach der Anschraubung gegebenen Druck zu übertragen; Ösen oder Verbindungsbohrungen (9.8), die dazu dienen, sich mit den Befestigungsvornchtungen zu verbinden, die am Boden (10) erhalten wurden; und mindestens zwei flexible Lamellen (9.5), die sich beim Anschrauben an den Innendurchmesser des Halses (12) des Behälters anpassen, und die, nachdem die richtige Position erreicht wurde, an den beiden Innengeometrien (12.3) des Halses (12) des Behälters "einrasten", sodass der eventuelle Versuch einer Nachahmung/Entfernung des einmal angeschraubten Verschlusses blockiert wird.

7. Behälter gemäß Patentanspruch 2, der **dadurch gekennzeichnet ist, dass** der genannte Boden (10) nach seiner Verbindung mit der Abdeckvorrichtung (9) durch seine Verankerungsösen (9.8), an denen sich die flexiblen Zähne (10.1), die am Boden (10) vorhanden sind, verankern, die Funktion hat, die beiden Federn, vorzugsweise aus Edelstahl, vorzuspannen und zu blockieren, die sich jeweils unter den Kolben (8) befinden und mit ihrem Oberteil auf dem Teller (8.3) dieser Kolben (8) liegen und in Zylinder (10.13) eingesetzt werden, die an jeder Steigleitung (9.3) des Bodens (10) erhalten wurden, und auf diesen durch die Kreuzrippe (10.6) der Steigleitungen (10.3) des Bodens (10) mit ihrem Unterteil liegen/mit diesen verbunden sind, die Zylinder (10.13), die in der Mitte jeder Steigleitung (9.3) des Bodens (10) erhalten wurden, dienen dazu, die Kolben (8) in der Öffnungs- und Schließphase der beiden Steigleitungen (9.3) zu führen und mit der Geometrie (8.2) des Kolbens (8) in der Öffnungsphase des Hahns (1) zusammenzuarbeiten, sodass sie als Anschlag beim Absenken des Kolbens (8) dienen, der sich auf diese Weise vertikal nur um wenige Millimeter bewegen kann und sich dann blockiert, sodass der Kolben (8), der sich im Inneren der Anschlüsse befindet, die sich mit den Steigleitungen (9.3) verbinden, die vollständige Öffnung der Anschlüsse veranlasst und je nach dem berücksichtigten Anschluss den Gas- und/oder Flüssigkeitsfluss ermöglicht.

8. Behälter gemäß Patentanspruch 7, der **dadurch gekennzeichnet ist, dass** die beiden, vorzugsweise zylinderförmigen, Vorsprünge (10.3) des Bodens (10) dazu dienen, ein Steigrohr zu verbinden, das unter dem Anschluss der Steigleitung angebracht wird, wo die vom Gas gestoßene Flüssigkeit entlang strömt, die Verankerungsrohre (10.3) sind mit Kreisrippen (10.10) ausgestattet, die dadurch, dass sie das Steigrohr berühren, dazu dienen, dieses unter den Kreuzen (10.6) abzudichten, wobei außerdem an jeder Steigleitung (9.3) Zylinderdichtungen (10.9) vorhanden sind, die dazu dienen, die Geometrie (9.10) der Abdeckvorrichtung (9) abzudichten, und auf diese Weise getrennte Leitungen für die Luft und die Flüssigkeit zu erzeugen.

9. Behälter gemäß Patentanspruch 7 oder 8, der **dadurch gekennzeichnet ist, dass** der Boden (10) durch die flexiblen Verankerungen eingespannt wird, die an diesem Boden (10) mit den Verbindungsösen (9.8), die an der Abdeckvorrichtung (9) vorhanden sind, erhalten wurden, die Struktur des Bodens (10) wird durch Bohrungen (10.4) erleichtert, aber in der Struktur durch einen Zylinder (10.11) und Rippen (10.12) verstärkt, die dazu dienen, die Festigkeit des Bodens (10) zu erhöhen, der außerdem mit einem Anschlagbereich (10.2) ausgestattet ist, der ggf. mit dem Zylinder (9.10) der Abdeckvorrichtung (9) in Kollision treten kann und dadurch das perfekte Montagemaß und folglich die ordnungsgemäße Montage der Abdeckvorrichtung (9) und des Bodens (10) sowie einen seitlichen Abfluss am Element (10.5) garantiert, der nach der Verbindung mit der Abdeckvorrichtung (9) dazu dient, den hinteren Bereich der flexiblen Lamellen (9.5) zu befreien und die Biegung beim Anschrauben oder Einrasten am Hals (12.2) und daher die darauf folgende Einspannung an der Geometrie (12.3), die den internen Schutz gegen Nachahmung bietet, ermöglicht.

10. Behälter gemäß Patentanspruch 2, der **dadurch gekennzeichnet ist, dass** der Kolben (8) das längliche Element ist, an dem die O-Dichtringe (13) in entsprechenden Hohlräumen (8.4) angebracht sind, diese O-Ringe (13) dienen durch den Schub der darunter befindlichen Feder dazu, die hermetische Schließung und/oder die Öffnung der Steigleitungen (9.3) auszulösen, der Kolben (8) hat eine Aufnahme (8.4) für den O-Dichtring (13), einen abgeschrägten Kopf, der sich an das Innenprofil der Steigleitungen (9.3) anpasst, einen oberen Anschlagbereich der Metallfeder, in dem sich der untere Anschlagbereich (10.6) am Boden (10.1) befindet, eine Geometrie mit mechanischem Anschlag (8.2), die dazu dient, den Ausschlag des Kolbens (8) beim Öffnen zu begrenzen, der den Anschlag der Geometrie (10.6) des Bodens (10) erreicht, und eine vertikale Kreuzführung.

11. Behälter gemäß Patentanspruch 2, der **dadurch gekennzeichnet ist, dass** das genannte Siegel (11) ein Körper ist, der dazu dient, die Steigleitungen (9.3) der Abdeckvorrichtung (9) nach der Füllung zu schützen, und der ggf. dazu dient, das Gewicht der Palettisierung zu tragen, das genannte gegen Nachahmung geschützte Siegel (11) dient dazu, die Unversehrtheit des Packaging durch ein sichtbares Tampersystem mit Ring und Bruchbrücken (11.2) zu bestimmen, das Siegel (11) ist außerdem mit einem abnehmbaren Deckel (11.3) mit Geometrien (11.4) mit Kreisschnitt ausgestattet, die dazu dienen, den Widerstand der Struktur des Bestandteils zu erhöhen, der Hahn (1) ist mit einem flexiblen Lamellensystem (11.6) an den Geometrien (7.3), die am Körper (7) erhalten wurden, eingespannt.

12. Behälter gemäß Patentanspruch 2, der **dadurch gekennzeichnet ist, dass** mindestens der Hals (12) ein länglicher Körper ist, der mit einem Gewinde mit Sicherheitsvorrichtung (12.4) für die Entleerung der Gase im Falle einer forcierten und versehentlichen Öffnung versehen ist, der im Falle eines forcierten Abschraubens den Ablass des Innendrucks des Behälters nach außen ermöglicht, bevor die Abschraubung beendet ist, sodass sich der Hahn (1) erst frei bewegen kann, wenn die Sicherheit besteht, dass dieser nicht durch den Innendruck verschoben wird, der anderenfalls Sachgegenstände beschädigen und Personen verletzen könnte.

13. Behälter gemäß Patentanspruch 12, der **dadurch gekennzeichnet ist, dass** der Hals (12) mit folgenden Vorrichtungen versehen ist: Mit einem Außenring (12.5), der ggf. dazu dient, einen Griff zu stützen; mit externen Blockier- oder gegen Nachahmung geschützten Vorrichtungen (12.1), vorzugsweise mit vier flexiblen Geometrien (7.5) des Hauptkörpers (7) an vier Außengeometrien (12.1) des Halses (12) des Behälters; mit internen gegen Nachahmung geschützten Vorrichtungen (12.3), die dazu dienen, nach dem Anschrauben des Hahns (1) am Hals (12) mit den flexiblen Lamellen (9.5) der Abdeckvorrichtung (9) zu arbeiten.

## Revendications

1. Robinet de distribution (1) à double colonne (9.3) pour un récipient de liquides en matière plastique de type keg, de préférence en polytéréphtalate d'éthylène, PET, comprenant :
• un corps principal (7) ;
• au moins un dispositif de couverture (9) situé à une première extrémité du corps principal (7) et doté au moins de deux colonnes (9.3), une pour l'entrée de gaz dans le corps principal (7) et une pour la sortie de liquide du corps principal (7) ;
• au moins deux pistons (8) contenus dans le corps principal (7), chacun accouplé opérationnellement à l'une des colonnes (9.3) par des bagues toriques (13), de préférence à section circulaire, montées dans des creux respectifs (8.4) créés sur les pistons (8), pour commander l'ouverture d'une colonne (9.3) dédiée à la sortie du liquide et l'ouverture simultanée de l'autre colonne (9.3) dédiée à l'entrée du gaz servant à pousser vers l'extérieur le liquide contenu dans le récipient ;
• au moins un fond (10) placé à la seconde extrémité du corps principal (7) opposée à la première extrémité, ce fond (10) est accouplé opérationnellement aux pistons (8) à travers des ressorts métalliques (15) montés sur les pistons (8) pour commander le fonctionnement ;
**caractérisé en ce qu'**il comprend par ailleurs :
• au moins un sceau d'inviolabilité (11) situé dessus et autour du dispositif de couverture (9) pour empêcher un accès extérieur non voulu aux colonnes (9.3).

2. Récipient pour liquides en matière plastique de type keg, de préférence en polytéréphtalate d'éthylène, PET, **caractérisé par le fait qu'**il comprend :
a) au moins un robinet de distribution (1) à double colonne (9.3) selon la revendication 1 ; et
b) au moins un col (12) du récipient de type keg en mesure de se relier opérationnellement au robinet de distribution (1) et doté de moyens d'inviolabilité internes (12.3) et externes (12.1) pouvant coopérer respectivement avec les ailettes flexibles (9.5) du dispositif de couverture (9) et les dentes flexibles (7.5), de préférence quatre, situées sur le corps principal (7) du robinet (1) et visant à former deux systèmes d'inviolabilité.

3. Récipient, selon la revendication 2, **caractérisé en ce que** le corps principal (7) est en mesure de bloquer le dispositif de couverture (9) sur le col (12) et de fournir la bonne tension au joint torique (14) pour assurer l'étanchéité ; le corps (7) possède des moyens de connexion (7.2), de préférence un filetage d'ancrage, au récipient ; des moyens d'ancrage (7.3) pour le sceau de garantie d'inviolabilité (11); des moyens d'ancrage (7.4) au dispositif de couverture (9), de préférence réalisés avec des dents flexibles ; et des moyens d'inviolabilité (7.5) en mesure de s'ancrer sur les éléments (12.1) présents sur le col (12) du récipient.

4. Récipient, selon la revendication 3, **caractérisé en ce que** le corps principal (7) est par ailleurs doté d'une zone "pleine" (7.6) avec des moyens indicateurs en évidence, de préférence la lettre "G", qui, une fois le robinet (1) assemblé, comme la partie située sous le dispositif de couverture (9) aura une couleur différente du corps (7), restera en évidence, en indiquant avec précision laquelle des deux colonnes (9.3) est dédiée au raccordement du gaz ; le corps (7) est également doté d'une zone pleine (7.7) et une zone à demi-cercle "vide" (7.8), et, toujours en exploitant la couleur différente des deux composants, dispositif de couverture (9) et corps (7), en mesure de fournir avec une évidence nette les deux moitiés par deux couleurs différentes, qui mettront en évidence les deux raccordements, celui du gaz, G et celui du liquide N.

5. Récipient, selon la revendication 3 ou 4, **caractérisé en ce que** le corps principal (7) est aussi doté d'une géométrie à nervures (7.11), utile pour avoir une zone de prise nécessaire pour visser le robinet (1) assemblé sur le col (12), de moyens de renforcement (7.13) et de moyens d'implémentation (7.14) de la zone de prise, mais aussi de moyens de transmission (7.9) du mouvement circulatoire de vissage, tous les trois en mesure de transmettre le mouvement de vissage au robinet (1) assemblé au dispositif de couverture (9) grâce à la géométrie (9.4).

6. Récipient, selon la revendication 2, **caractérisé en ce que** le dispositif de couverture (9) est en mesure « d'enfoncer » un joint torique (14), de préférence à section rectangulaire, qui sera en pression sur le col (12) du récipient grâce au corps (7) ; ce dispositif de couverture (9) est doté, entre les deux colonnes (9.3), d'une géométrie sur laquelle on a créé deux sous-équerres ou dents d'ancrage (9.1) qui servent à s'ancrer de manière stable au corps (7) à l'aide de moyens à dents flexibles (7.4), la partie inférieure allongée du dispositif de couverture (9) a de nombreuses géométries taillées sur le cylindre allongé : moyens de tenue (9.6) pour tenir en position le joint torique (14) à section rectangulaire ; un disque (9.7) en mesure de transmettre la pression venant du corps (7) au dispositif de couverture (9) après avoir été vissé ; trous de connexion (9.8) s'accouplant aux moyens de fixation situés sur le fond (10) ; et au moins deux ailettes flexibles (9.5), qui, durant le vissage, s'adapteront au diamètre interne du col (12) du récipient et, quand la bonne position sera atteinte, se déclencheront sur les deux géométries internes (12.3) du col (12) du récipient, en bloquant de l'intérieur l'éventuelle tentative de violation/retrait de la fermeture après le vissage.

7. Récipient, selon la revendication 2, **caractérisé en ce que** le fond (10), après avoir été relié au dispositif de couverture (9) grâce à ses trous d'accrochage (9.8) sur lesquels s'accrocheront les dents flexibles (10.1) présentes sur le fond (10), aura la fonction de pré-charger et de bloquer les deux ressorts, de préférence en acier inox, qui se trouvent respectivement au-dessous des pistons (8), et dont la partie supérieure repose contre le plateau (8.3) des pistons (8) ; ces ressorts sont insérés dans des cylindres (10.13), montés dans chaque colonne (9.3) du fond (10) et posés/assujettis à ces derniers sur les nervures en croix (10.6) des colonnes (10.3) du fond (10) dans leur partie inférieure, les cylindres (10.13) montés au centre de chaque colonne (9.3) du fond (10) guident les pistons (8) en phase d'ouverture et de fermeture des deux colonnes (9.3), et ils coopèrent avec la géométrie (8.2) du piston (8), en phase d'ouverture du robinet (1), en servant de butée de descente du piston (8), qui pourra ainsi se déplacer en verticale seulement de quelques millimètres, puis il se bloquera ; ainsi le piston (8), présent à l'intérieur des jonctions qui se raccorderont aux colonnes (9.3), ouvrira complètement les jonctions et permettra le flux de gaz et/ou de liquide, selon la jonction considérée.

8. Récipient, selon la revendication 7, **caractérisé en ce que** les deux saillies (10.3), de préférence cylindriques, du fond (10) sont en mesure de relier un tube plongeur qui sera mis sous la jonction à colonne où passera le liquide poussé par le gaz, les tubes d'accrochage (10.3) sont pourvus de nervures circulaires (10.10) qui servent, en interférant avec le tube plongeur, à bloquer ce dernier sous les croix (10.6) ; par ailleurs, il y a sur chaque colonne (9.3) des zones de tenue cylindriques (10.9) qui se tiennent sur la géométrie (9.10) du dispositif de couverture (9), en créant ainsi des conduits séparés pour l'air et pour le liquide.

9. Récipient, selon la revendication 7 ou 8, **caractérisé en ce que** le fond (10) est encastré à l'aide de crochets flexibles montés sur le fond (10), avec les trous de connexion (9.8) présents sur le dispositif de couverture (9) ; la structure du fond (10) est allégée par des trous (10.4) mais renforcée structurellement par un cylindre (10.11) et des nervures (10.12) augmentant sa rigidité ; par ailleurs, le fond (10) est doté d'une zone de butée (10.2) qui heurtera éventuellement le cylindre (9.10) du dispositif de couverture (9) en garantissant un assemblage parfait et le bon assemblage conséquent du dispositif de couverture (9) et du fond (10), ainsi que d'une évacuation latérale sur l'élément (10.5) en mesure, après avoir été accouplé au dispositif de couverture (9), de libérer la zone arrière des ailettes flexibles (9.5), en permettant leur flexion durant le vissage ou le déclic sur le col (12.2), et donc l'encastrement sur la géométrie (12.3) qui fournit l'inviolabilité interne.

10. Récipient, selon la revendication 2, **caractérisé en ce que** le piston (8) est l'élément de forme allongée sur lequel se trouvent les bagues toriques (13) dans leurs creux respectifs (8.4) ; les bague toriques (13), grâce à la poussée du ressort situé au-dessous, sont en mesure de déclencher la fermeture hermétique et/ou l'ouverture des colonnes (9.3) ; le piston (8) possède un logement (8.4) pour la bague torique (13), une tête arrondie qui s'adapte au profil interne des colonnes (9.3), une zone de butée supérieure du ressort métallique, où la zone de butée (10.6) se trouve sur le fond (10.1), une géométrie de butée mécanique (8.2) qui limite la course du piston (8) pendant l'ouverture, en allant en butée contre la géométrie (10.6) du fond (10), et un guide vertical à croisillon.

11. Récipient, selon la revendication 2, **caractérisé en ce que** le sceau (11) est un corps qui protège les colonnes (9.3) du dispositif de couverture (9) après le remplissage, en mesure éventuellement de soutenir le poids de la palettisation, ce sceau d'inviolabilité (11) détermine l'intégrité de l'emballage à l'aide d'un système inviolable à anneau et de ponts à points de rupture (11.2) ; par ailleurs, le sceau (11) est doté d'un couvercle amovible (11.3) avec des géométries (11.4) à section circulaire en mesure d'augmenter la résistance structurelle de la pièce, le robinet (1) est encastré avec un système à ailettes flexibles (11.6) sur les géométries (7.3) taillées sur le corps (7).

12. Récipient, selon la revendication 2, **caractérisé en ce que** le col (12) au moins est un corps allongé doté de filetage avec dispositif de sécurité (12.4) pour évacuer les gaz en cas d'ouverture forcée et accidentelle, qui permet, en cas de dévissage forcé, d'évacuer la pression interne du récipient à l'extérieur avant la fin du dévissage ; donc le robinet (1) ne pourra bouger librement que s'il y a la certitude qu'il ne sera pas poussé par la pression interne qui, dans le cas contraire, pourrait provoquer des blessures corporelles ou des détériorations matérielles.

13. Récipient, selon la revendication 12, **caractérisé en ce que** le col (12) est doté : d'une bague externe (12.5) pouvant supporter une poignée, de moyens de blocage ou anti-violation externes (12.1), de préférence du type à quatre géométries flexibles (7.5) du corps principal (7) sur quatre géométries externes (12.1) du col (12) du récipient, et de moyens anti-violation internes (12.3) qui travaillent, après avoir vissé le robinet (1) sur le col (12), avec les ailettes flexibles (9.5) du dispositif de couverture (9).
